# EUROPEAN PATENT APPLICATION

(11) **EP 4 238 664 A1**
(43) Date of publication of application: **06.09.2023**
(21) Application number: 21886785.1
(22) Date of filing: 27.10.2021
(51) Int. Cl.: B08B 5/04

(54) **FOREIGN MATTER REMOVAL DEVICE**

(30) Priority: 27.10.2020 KR 20200140268; 27.10.2020 KR 20200140273
(71) Applicant: Lg Chem, Ltd., Seoul 07336 (KR)
(72) Inventor: PARK, Kyutae, Daejeon 34122 (KR); SONG, Youngsoo, Daejeon 34122 (KR); KIM, Sungdong, Daejeon 34122 (KR); SEO, Sangkee, Daejeon 34122 (KR); IM, Ye Hoon, Daejeon 34122 (KR); HWANG, Sung Tae, Daejeon 34122 (KR)
(74) Representative: Goddar, Heinz J.
(86) International application number: PCT/KR2021/015163
(87) International publication number: WO 2022/092791

(57) **Abstract**

The present invention relates to an foreign matter removal device, and more particularly, to an foreign matter removal device, in which a length of a main body portion is increased to correspond to a size of a large-scale cell for a vehicle, and a plurality of suction channels each having a swoosh shape is provided, thereby efficiently removing foreign substances produced during a process of manufacturing a cell for a vehicle.

## Description

### [Technical Field]

This application claims priority to and the benefit of Korean Patent Application Nos. 10-2020-0140273 and 10-2020-0140268 filed with the Korean Intellectual Property Office on October 27, 2020, the entire contents of which are incorporated herein by reference.

The present invention relates to an foreign matter removal device, and more particularly, to an foreign matter removal device, in which a length of a main body portion is increased to correspond to a size of a large-scale cell for a vehicle, and channels for detaching and removing foreign substances are separated, thereby efficiently removing foreign substances produced during a process of manufacturing a cell for a vehicle.

### [Background Art]

Recently, secondary batteries have been widely used not only for small-scale devices such as portable electronic devices, but also for electric vehicles that ensure driving power by using internal combustion engines and/or electric motors. The electric vehicles include a hybrid vehicle, a plug-in hybrid vehicle, and a pure electric vehicle that is driven by only an electric motor and a battery without an internal combustion engine.

In the case of the electric vehicle, a large number of secondary batteries are electrically connected to increase capacity and output. In particular, pouch-type secondary batteries are often used for middle-scale or large-scale devices because the pouch-type secondary batteries are easy to stack.

Types of secondary batteries currently used widely include a lithium-ion battery, a lithium-polymer battery, a nickel-cadmium battery, a nickel-hydrogen battery, a nickel-zinc battery, and the like. An operating voltage of a unit secondary battery cell, i.e., a unit battery cell is about 2.5 V to 4.2 V. Therefore, when an output voltage higher than the operating voltage is required, a plurality of battery cells is connected in series and constitutes a battery pack. In addition, the plurality of battery cells is connected in parallel and constitutes the battery pack depending on a charge/discharge capacity required for the battery pack. The number of battery cells included in the battery pack may be variously set depending on a required output voltage or a required charging/discharging capacity.

Meanwhile, such a large-scale secondary battery for a vehicle has a problem in that a risk of defective grounding caused by foreign substances is high because the large-scale secondary battery has a larger area than a general secondary battery. In particular, there are many factors related to the production of and exposure to foreign substances such as production of foreign substances during a process of cutting an electrode by using a cutting unit, exposure to foreign substances in a movement section according to a process flow below a feeding belt/cutter, or dropping of foreign substances in an upward/downward direction according to arrangement of facilities.

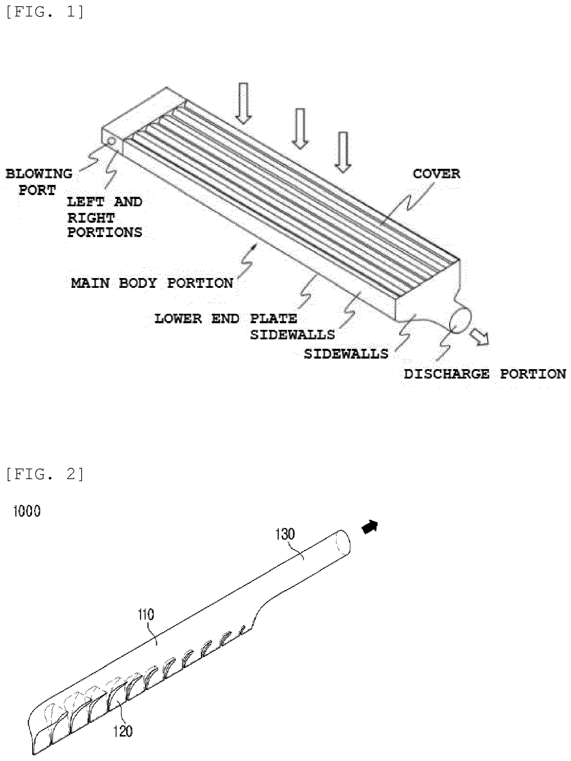

FIG. 1 is a perspective view illustrating a structure of an foreign matter removal device in the related art. The foreign matter removal device in the related art includes a main body portion configured to accommodate falling foreign substances, a suction device configured to suck foreign substances trapped in the main body portion, an air blowing part configured to guide the foreign substances trapped in the main body portion in a direction of the suction device, and a cover having a structure mounted on the main body portion and configured to prevent the foreign substances from being scattered to the outside by an air flow generated by the air blowing part.

There is no standard proposed related to the foreign matter removal device used for a process of manufacturing a secondary battery for a vehicle in the related art, and there is no foreign matter removal device that may treat a long cell for a vehicle that reaches up to 580 mm. For this reason, there is a problem in that defective grounding occurs because of foreign substances produced from a battery during a process of manufacturing the long cell for a vehicle that reaches up to 580 mm.

Therefore, there is a need for a solution to improve a structure of an foreign matter removal device that may maximize efficiency in removing foreign substances so that a problem of defective grounding caused by foreign substances does not occur during a process of manufacturing a long cell for a vehicle that reaches up to 580 mm.

### [Detailed Description of the Invention]

### [Technical Problem]

The present invention has been made in an effort to solve the above-mentioned problem, and an object of the present invention is to provide an foreign matter removal device, in which efficiency in removing foreign substances is maximized by designing a new structure of the foreign matter removal device that includes a plurality of channels each having a swoosh shape.

Another object of the present invention is to provide an foreign matter removal device that improves efficiency in removing foreign substances, solves a problem of defective grounding of a large-scale secondary battery for a vehicle, and improves a battery yield.

### [Technical Solution]

An foreign matter removal device according to the present invention may include: a main body portion; a plurality of channels formed at one side of the main body portion and configured to suction foreign substances; and a discharge portion configured to provide a suction force to the channels and discharge the foreign substances to the outside.

In an embodiment, the apparatus may further include: a main spray body portion positioned at one side of the main body portion; a plurality of spray channels included in the main spray body portion and configured to detach the foreign substances and correspond to the channels; and a spray port portion positioned at one side of the discharge portion and configured to supply air to the spray channels.

### [Advantageous Effects]

According to the present invention, it is possible to maximize efficiency in removing foreign substances by designing a new structure of the foreign matter removal device that includes the plurality of channels each having a swoosh shape.

In addition, it is possible to improve efficiency in removing foreign substances, solve a problem of defective grounding of a large-scale secondary battery for a vehicle, and improve a battery yield.

### [Brief Description of Drawings]

FIG. 1 is a perspective view illustrating a structure of an foreign matter removal device in the related art.
FIG. 2 is a perspective view illustrating a structure of an foreign matter removal device according to an embodiment of the present invention.
FIG. 3A is a cross-sectional view illustrating a lateral structure of the foreign matter removal device according to the present invention, and FIG. 3B is a cross-sectional view illustrating a front structure of the foreign matter removal device according to the present invention.
FIG. 4 is a perspective view illustrating a structure of an foreign matter removal device according to another embodiment of the present invention.
FIG. 5A is a cross-sectional view illustrating a front structure of the foreign matter removal device according to the present invention, and FIG. 5B is a cross-sectional view illustrating a rear structure of the foreign matter removal device according to the present invention.
FIG. 6A is a cross-sectional view illustrating a lateral (right) structure of the foreign matter removal device according to the present invention, and FIG. 6B is a cross-sectional view illustrating a lateral (left) structure of the foreign matter removal device according to the present invention.
FIG. 7 is a view illustrating a distribution of a flow velocity of an air flow generated in the foreign matter removal device according to the present invention.
FIG. 8 is a view illustrating a distribution of a flow velocity of an air flow generated in the foreign matter removal device according to Example 1 of the present invention.
FIG. 9 is a view illustrating a distribution of a flow velocity of an air flow generated in an foreign matter removal device according to Example 2 of the present invention.

### [Explanation of Reference Numerals and Symbols]

- 1000:: Foreign matter removal device
- 100:: Suction part
- 110:: Main body portion
- 111:: Suction wall
- 120:: Channel
- 121:: Air suction portion
- 122:: First guide portion
- 130:: Discharge portion
- 200:: Spray part
- 210:: Main spray body portion
- 211:: Spray wall
- 220:: Spray channel
- 230:: Spray port portion

### [Best Mode]

The detailed description of the present invention is provided to completely explain the present invention to a person with ordinary skill in the art. Throughout the specification, unless explicitly described to the contrary, when one component "comprises (includes)" another component or "characterized by" having a certain structure and a certain shape, this means that other components, structures, and shapes may be included without being excluded.

The present invention may be variously modified and may have various embodiments, and specific embodiments will be described in detail in the detailed description. However, the description of the embodiments is not intended to limit the contents of the present invention, but it should be understood that the present invention is to cover all modifications, equivalents and alternatives falling within the spirit and technical scope of the present invention.

FIG. 2 is a perspective view illustrating a structure of an apparatus 1000 for removing foreign substances according to an embodiment of the present invention. With reference to FIG. 2, the apparatus 1000 for removing foreign substances may include a suction part 100. The suction part 100 may include a main body portion 110, channels 120, and a discharge portion 130. The respective components will be described below.

The main body portion 110 serves to provide therein a space in which an air flow is generated by negative pressure so that foreign substances introduced through the channels 120, which will be described below, are easily discharged to the discharge portion 130. To perform the above-mentioned functions, the main body portion 110 may have a hollow portion so that the air flow may be generated by inside negative pressure so that foreign substances introduced through the channel 120 are easily discharged to the discharge portion 130.

Further, the main body portion 110 may have a polyhedral column structure that extends by a predetermined length. For example, the main body portion 110 may have a column structure having various cross-sectional shapes such as a circular, quadrangular, pentagonal, or hexagonal cross-sectional shape.

The main body portion 110 may have a length of 180 mm to 580 mm depending on a shape of a secondary battery for a vehicle for which the apparatus 1000 for removing foreign substances is used. In this case, in case that a length of the main body portion 110 is less than 180 mm, there may occur a problem in that the main body portion 110 cannot accommodate a large amount of foreign substances produced during a process of manufacturing a secondary battery for a vehicle. Further, in case that a length of the main body portion 110 is more than 580 mm, a volume of the main body portion 110 increases, which may cause a problem of deterioration in common usability of the apparatus 1000 for removing foreign substances during the process of manufacturing a secondary battery for a vehicle.

The channel 120 serves as a passageway through which foreign substances generated during the process of manufacturing a secondary battery for a vehicle are suctioned into the apparatus 1000 for removing foreign substances. To perform the above-mentioned functions, one or more channels 120 may be formed at one side of the main body portion 110, and the channel 120 has an opened shape.

Based on a direction perpendicular to the main body portion 110, one side of the channel 120 may have a straight shape, and the other side of the channel 120 may have a curved shape. In other words, the channel 120 may be provided in the form in which straight channels formed in height and length directions of the main body portion 110 are connected by a curved channel. For example, the channel 120 may be formed in a swoosh shape (a shape of a logo of Nike) having one side that defines a curved line.

Four to twelve channels 120 may be provided depending on a shape of a secondary battery for a vehicle for which the apparatus 1000 for removing foreign substances is used. In this case, in case that the number of channels 120 is less than four, there may occur a problem in that an effect of suctioning a large amount of foreign substances produced during the process of manufacturing a secondary battery for a vehicle is insufficient. Further, in case that the number of channels 120 is more than twelve, a volume of the main body portion 110 for accommodating the plurality of channels 120 increases, which may cause a problem of deterioration in common usability of the apparatus 1000 for removing foreign substances during the process of manufacturing a secondary battery for a vehicle.

In the embodiment, the channels 120 may be formed in shapes in which the lengths of the channels 120 decrease as the distance from the discharge portion 130, which will be described below, decreases so that speeds of suctioning foreign substances into the main body portion 110 are uniformized. In this case, the lengths of the plurality of channels 120 decrease at a constant ratio in proportion to distances between the channels 120 and the discharge portion 130. Therefore, even though suction forces applied to the channels 120 are different, the suction amounts and speeds of foreign substances introduced through the channels 120 may be uniformized.

The discharge portion 130 serves to provide a suction force to the channel 120 and discharge foreign substances, which are introduced into the main body portion 110 through the channel 120, to the outside. To perform the above-mentioned functions, the discharge portion 130 may have a column structure having one opened end, and a suction device or a pump configured to suction foreign substances may be positioned at one end of the discharge portion 130. In this case, one end of the discharge portion 130 may be a side positioned opposite to an end connected to the main body portion 110 and mean one of two opposite ends of the discharge portion 130 that is positioned in an air suction direction.

The discharge portion 130 may provide a suction force to the channel 120 through the suction device and trap foreign substances introduced into the main body portion 110. In this case, to easily discharge foreign substances, an inner diameter of the discharge portion 130 may vary depending on a length of the main body portion 110, the number of channels 120, and the performance of the suction device. Further, a diameter of the discharge portion 130 may increase in a direction in which foreign substances are discharged.

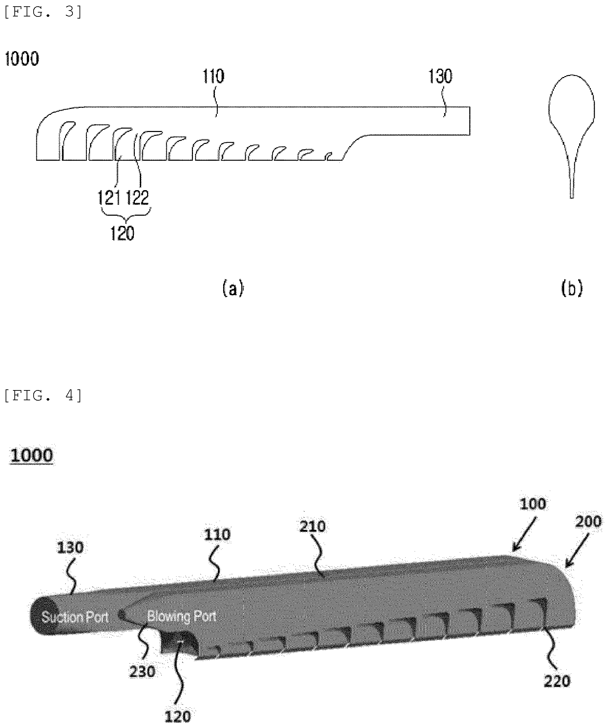

FIG. 3A is a cross-sectional view illustrating a lateral structure of the apparatus 1000 for removing foreign substances according to the present invention. With reference to FIG. 3A, the channel 120 may include an air suction portion 121 disposed adjacent to outside foreign substances, and a first guide portion 122 configured to connect the channel 120 and the main body portion 110.

The air suction portion 121 is disposed adjacent to foreign substances positioned at the outside and serves as a passageway through which foreign substances are suctioned by the suction force generated in the channel 120. To perform the above-mentioned functions, the air suction portion 121 may be formed in a straight shape toward the main body portion 110.

The first guide portion 122 serves to guide foreign substances that have passed through the air suction portion 121 so that the foreign substances are easily moved into the body portion 110. To perform the above-mentioned functions, the first guide portion 122 may be formed in a curved shape having a predetermined curvature. In this case, one end of the first guide portion 122 may extend toward the discharge portion 130 to guide foreign substances so that the foreign substances are easily discharged to the discharge portion 130.

FIG. 3B is a cross-sectional view illustrating a front structure of the apparatus 1000 for removing foreign substances according to the present invention. With reference to FIG. 3B, the main body portion 110 may be formed to have an inner width that increases in a direction to the other side from one side at which the channel 120 is formed so that a flow velocity of the internal air flow generated by negative pressure increases. In other words, an inner width of the main body portion 110 may increase toward the other side from one side at which the channel 120 is formed. In this case, one side and one surface of the main body portion 110, in which the channel 120 is formed, may mean one surface of the main body portion 110 that is in contact with or closest to a ground surface or an object from which foreign substances are to be removed. That is, the main body portion 110 may be configured such that a diameter of the main body portion 110 may increase in a direction opposite to gravity. In this case, a diameter of the main body portion 110 may mean a distance between two symmetric opposite ends of a surface parallel to a direction perpendicular to the gravitational direction.

In this case, the main body portion 110 has a larger internal space than the channel 120, which increases a suctioning speed of the apparatus 1000 for removing foreign substances.

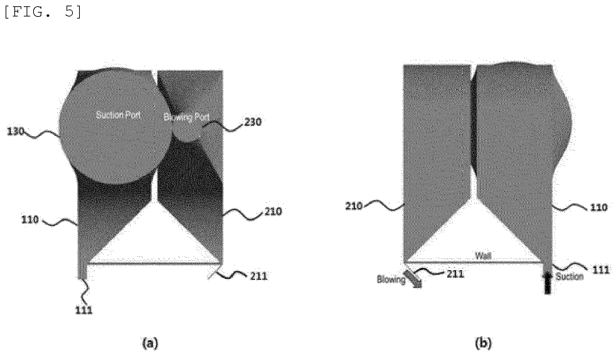

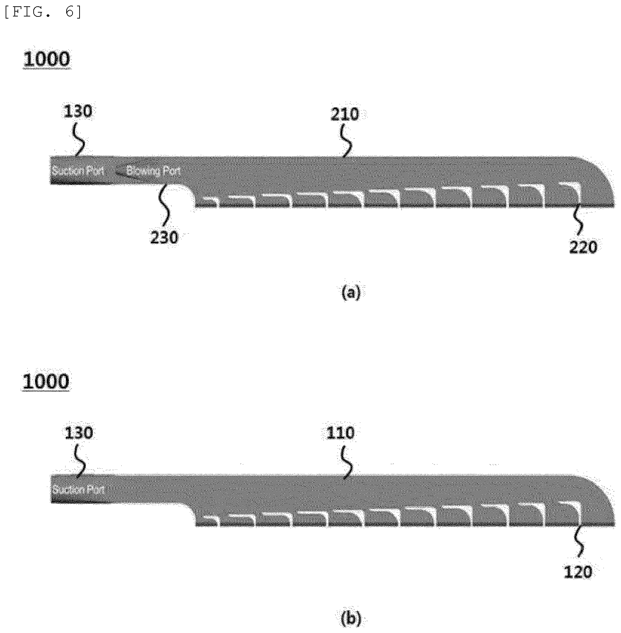

FIG. 4 is a perspective view illustrating a structure of the apparatus 1000 for removing foreign substances according to another embodiment of the present invention, FIG. 5A is a cross-sectional view illustrating a front structure of the foreign matter removal device according to the present invention, and FIG. 5B is a cross-sectional view illustrating a rear structure of the foreign matter removal device according to the present invention. Further, FIG. 6A is a cross-sectional view illustrating a lateral (right) structure of the apparatus 1000 for removing foreign substances according to the present invention, and FIG. 6B is a cross-sectional view illustrating a lateral (left) structure of the apparatus 1000 for removing foreign substances according to the present invention.

The apparatus 1000 for removing foreign substances according to another embodiment of the present invention may include the suction part 100 and a spray part 200.

The suction part 100 may include the main body portion 110, the channel 120, and the discharge portion 130. Because the main body portion 110, the channel 120, and the discharge portion 130 are identical in configuration to those of the apparatus 1000 for removing foreign substances according to the embodiment of the present invention, a detailed description thereof will be omitted.

The spray part 200 may include a main spray body portion 210, spray channels 220, and a spray port portion 230.

The main spray body portion 210 may define an overall shape of the spray part 200 and have a hollow shape, such that an air flow may be generated in the main spray body portion 210 by air supplied by the spray port portion 230.

The main spray body portion 210 may have a polyhedral column structure that extends by a predetermined length. For example, the main spray body part 210 may have a column structure having various cross-sectional shapes such as a circular, quadrangular, pentagonal, or hexagonal cross-sectional shape.

The main spray body portion 210 may be formed to correspond to the main body portion 110. In the embodiment, the main spray body portion 210 may have a length of 180 mm to 580 mm depending on a shape of a secondary battery for a vehicle for which the apparatus 1000 for removing foreign substances is used. In this case, in case that a length of the main spray body part 210 is less than 180 mm, there may occur a problem in that the main spray body part 210 cannot accommodate a large amount of foreign substances produced during a process of manufacturing a secondary battery for a vehicle. Further, in case that a length of the main spray body part 210 is more than 580 mm, a volume of the main spray body part 210 increases, which may cause a problem of deterioration in common usability of the apparatus 1000 for removing foreign substances during the process of manufacturing a secondary battery for a vehicle.

Further, the main spray body portion 210 is positioned at one side of the main body portion 110, and the main body portion 110 and the main spray body portion 210 are spaced apart from each other at a predetermined distance, such that foreign substances introduced into the main body portion 110 do not interfere with air supplied to the main spray body portion 210.

An inner width of the main spray body portion 210 may increase in a direction to the other side from one side at which the spray channel 220 is formed. In other words, a diameter of the main spray body portion 210 may increase toward the other side from one side at which the spray channel 220 is formed. In this case, one surface of the main spray body portion 210 may mean a lower surface of the main spray body portion 210 in which the spray channel 220 is formed, i.e., one surface of the main spray body portion 210 that faces a wall or the ground surface on which foreign substances are positioned. With reference to FIG. 5, a surface of the main body portion 110 and a surface of the main spray body portion 210, which face each other, may each have a predetermined gradient in a direction toward a lower portion of the main spray body portion 210 or a lower portion of the main body portion 110. In other words, the surface of the main body portion 110 and the surface of the main spray body portion 210, which face each other, may each have a predetermined height gradient in a direction from the lower portion of the main body portion 110 and the lower portion of the main spray body portion 210.

In this case, as a width of the lower portion of the main spray body portion 210 decreases, a space may be formed between the lower portion of the main body portion 110 and the lower portion of the main spray body portion 210. In other words, when the apparatus 1000 for removing foreign substances comes into contact with a surface of an object, the lower portion of the main body portion 110, the lower portion of the main spray body portion 210, and the surface of the object may define a triangular space.

In the case of the suction part 100 according to another embodiment, one surface of the main body portion 110 of the suction part 100, which faces the main spray body portion 210 may have a predetermined gradient such that an inner width thereof may increase in a direction from a lower side to an upper side of the main body portion 110.

Further, the main spray body portion 210 may further include a spray wall 211 having a predetermined height and formed on the lower portion of the main spray body portion 210. In addition, the spray wall 211 may be formed to define a predetermined angle with respect to a width direction of the main spray body portion 210. The spray wall 211 may guide the air sprayed from the spray channel 220. The spray wall 211 allows air to be dispersed over a large range of the surface of the object, which may increase an area in which foreign substances are detached.

The spray channel 220 is formed in the main spray body portion 210 and configured to detach foreign substances. Further, the spray channel 220 may be formed in the lower portion of the main spray body portion 210 and positioned adjacent to an object including foreign substances. The spray channel 220 penetrates the main spray body portion 210, and the air may be discharged through all surfaces of the spray channel 220.

In the apparatus 1000 for removing foreign substances according to the present invention, the foreign substances detached by the air sprayed from the spray channel 220 may be suctioned into the channel 120 and removed. Therefore, the spray channel 220 may correspond in shape and number to the channel 120.

That is, a length and a height of the channel 120 may decrease in a direction from a front end of the main body portion 110 to a portion where the discharge portion 130 is connected. Therefore, the length and height of the spray channel 220 may decrease in the direction from the front end of the main spray body portion 210 to the portion where the spray port portion 230 is connected, and the spray channel 220 may have a swoosh shape corresponding to the shape of the channel 120. In other words, the spray channel 220 may include an air spray portion (not illustrated) disposed adjacent to foreign substances, and a second guide portion (not illustrated) configured to supply air to the air spray portion. The air spray portion may have a straight shape, and the second guide portion may have a curved shape.

The spray port portion 230 may be provided at a rear end of the main spray body portion 210 and extend. Further, the spray port portion 230 may be positioned at one side of the discharge portion 130.

The spray port portion 230 may be connected to an external pump, generate an air flow in the internal space of the main spray body portion 210, and supply air to the spray channel 220. In this case, the rear end of the main spray body portion 210 may mean an end of the spray port portion 230 at which air is initially supplied.

The spray port portion 230 may be smaller in length and diameter than the discharge portion 130. Therefore, a diameter of the spray port portion 230 may decrease in a direction opposite to the direction in which air is introduced.

The main body portion 110 according to another embodiment may further include a suction wall 111. The suction wall 111 is configured to allow the air suctioned into the suction part 100 to flow smoothly. Further, the suction wall 111 may be formed at the lower end of the main body portion 110 and have a predetermined height.

In this case, the width of the main body portion 110 means the shortest horizontal length, the length of the main body portion 110 means the longest length, and the height of the main body portion 110 means a length in a direction perpendicular to the length that means the width of the main body portion 110.

A flow ratio between the suction part 100 and the spray part 200 according to the present invention may be 1:4 to 1:8. In this case, the flow ratio may be a ratio between the amount of air suctioned by the suction part 100 and the amount of air sprayed from the spray part 200.

According to the apparatus 1000 for removing foreign substances according to the present invention, the air sprayed from the spray part 200 collides with the surface of the object and scatters in all directions together with foreign substances, and the suction part 100 suctions the air scattered in all directions, such that the air swirls on the surface of the object, which makes it possible to allow the suction part 100 to smoothly suction foreign substances.

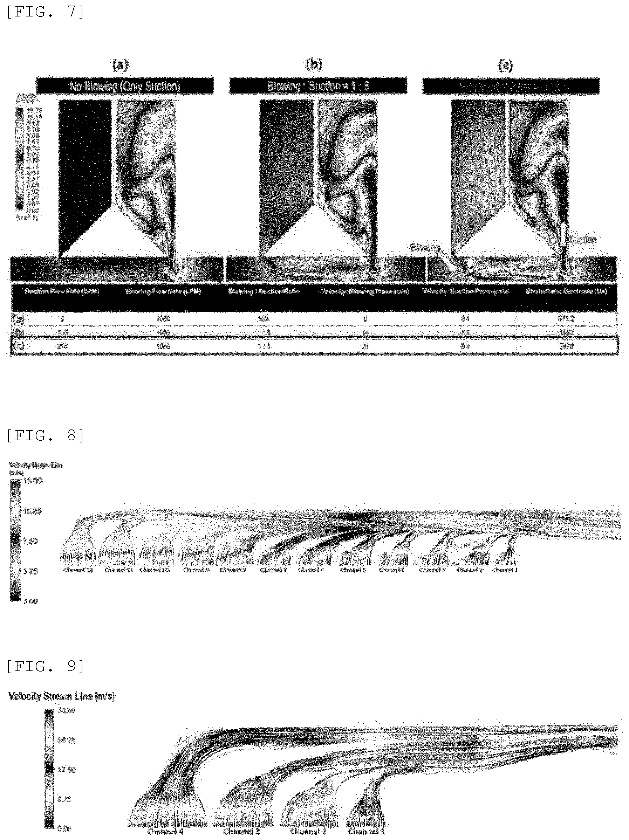

FIG. 7 is a view illustrating a distribution of a flow velocity of an air flow generated in the foreign matter removal device according to the present invention on the basis of a flow ratio between the suction part and the spray part. FIG. 7A is a view illustrating a distribution of a flow velocity of an air flow generated in the foreign matter removal device when only the suction part 100 is used to remove foreign substances, FIG. 7B is a view illustrating a distribution of a flow velocity of an air flow generated in the foreign matter removal device when the flow ratio is 1:8, and FIG. 7C is a view illustrating a distribution of a flow velocity of an air flow generated in the foreign matter removal device when the flow ratio is 1:4.

With reference to FIG. 7, when the flow ratio between the suction part 100 and the spray part 200 is less than 1:4 or no flow is generated in the spray part 200, the air flow stagnates on the surface of the object, which causes a problem of a decrease in a degree to which foreign substances are detached by the spray part 200 or a degree to which foreign substances are suctioned by the suction part 100. Further, in case that the flow ratio is more than 1:8, the suction part 100 suctions a larger amount of air stagnant on the surface of the object than the air sprayed from the spray part 200, which causes a problem in that air does not smoothly flow in the suction part 100.

### <Example 1>

The apparatus 1000 for removing foreign substances according to Example 1 of the present invention is the apparatus 1000 for removing foreign substances, in which the main body portion 110 has a length of 580 mm and a height of 68 mm, and twelve channels 120 are formed at one side of the main body portion 110.

### <Example 2>

The apparatus 1000 for removing foreign substances according to Example 2 of the present invention is the apparatus 1000 for removing foreign substances, in which the main body portion 110 has a length of 180 mm and a height of 68 mm, and four channels 120 are formed at one side of the main body portion 110.

**[Table 1]**

| Channel number | Uniformity index | Standard deviation | Average velocity (m/s) |
|---|---|---|---|
| Channel 1 | 0.9 | 2.56 | 10.61 |
| Channel 2 | 0.81 | 4.27 | 10.65 |
| Channel 3 | 0.87 | 3.74 | 11.01 |
| Channel 4 | 0.89 | 2.61 | 10.61 |
| Channel 5 | 0.91 | 2.28 | 11.08 |
| Channel 6 | 0.94 | 1.44 | 11.30 |
| Channel 7 | 0.95 | 1.4 | 11.60 |
| Channel 8 | 0.96 | 0.94 | 12.15 |
| Channel 9 | 0.97 | 0.61 | 11.63 |
| Channel 10 | 0.97 | 1.03 | 11.17 |
| Channel 11 | 0.97 | 0.63 | 11.84 |
| Channel 12 | 0.98 | 0.54 | 11.17 |
| Average value | 0.93 | 2.63 | 11.27 |

**[Table 2]**

| Channel number | Uniformity index | Standard deviation | Average velocity (m/s) |
|---|---|---|---|
| Channel 1 | 0.96 | 3.68 | 36.81 |
| Channel 2 | 0.95 | 4.67 | 34.94 |
| Channel 3 | 0.95 | 4.28 | 34.86 |
| Channel 4 | 0.95 | 3.84 | 33.30 |
| Average value | 0.95 | 4.32 | 34.70 |

Table 1 shows an experimental result of measuring a uniformity index, a standard deviation, and an average velocity in accordance with flow velocities in the plurality of channels 120 in case that the apparatus 1000 for removing foreign substances according to Example 1 of the present invention suctions foreign substances at a discharge flow rate of 680 LPM (Liter per minute). Further, Table 2 shows an experimental result of measuring a uniformity index, a standard deviation, and an average velocity in accordance with flow velocities in the plurality of channels 120 in case that the apparatus 1000 for removing foreign substances according to Example 2 of the present invention suctions foreign substances at a discharge flow rate of 680 LPM. FIG. 8 is a view illustrating a distribution of a flow velocity of an air flow generated in the foreign matter removal device according to Example 1 of the present invention, and FIG. 9 is a view illustrating a distribution of a flow velocity of an air flow generated in an foreign matter removal device according to Example 2 of the present invention.

As the uniformity index of the flow velocity in the channel 120 becomes closer to 1, a deviation between the flow velocities in the channels may decrease. With reference to Table 1 and FIG. 8, it can be seen that in the case of the apparatus 1000 for removing foreign substances according to Example 1 of the present invention, the uniformity index of the flow velocity in the channel 120 is as high as 0.93 which is closer to 1, and there is no comparative difference between the average velocity in each of the channels 120 and an overall average velocity of 11.27. In this case, the average velocity in each of the channels 120 may mean an average of velocities at which air in each of the channels is suctioned, sprayed, or moved.

In the apparatus 1000 for removing foreign substances, in case that the flow velocity in the plurality of channels 120 is equal or uniform, i.e., in case that an average value of the flow velocities in the plurality of channels 120 and an average value of the flow velocities in each of the plurality of channels 120 are closer to 1, all the channels may uniformly remove foreign substances, which makes it possible to reduce a region in which foreign substances remain on the object from which foreign substances need to be detached and removed.

Further, in the apparatus 1000 for removing foreign substances, when the average velocity in each of the channels 120 is similar to the overall average velocity value, all the plurality of channels 120 may remove the same or similar amount of foreign substances without partial deviation, which makes it possible to stably remove foreign substances from the entire region of the object instead of removing foreign substances from only a particular portion.

With reference to Table 2 and FIG. 9, it can be seen that in the case of the apparatus 1000 for removing foreign substances according to Example 2 of the present invention, the uniformity index of the flow velocity in the channel 120 is as high as 0.95 which is closer to 1, and there is no comparative difference between the average velocity in each of the channels 120 and an overall average velocity of 34.70.

Therefore, it can be seen that the apparatus 1000 for removing foreign substances according to the position according to the present invention forms a comparatively uniform flow velocity in the apparatus 1000 for removing foreign substances by differently adjusting the lengths and shapes of the plurality of channels 120 depending on the number of channels.

Only the shapes and number of channels used in Examples 1 and 2 are configured to be different, but the structures and shapes of other configurations are identical to one another.

### <Experimental Example>

The uniformity in the suction part and the spray part and the average velocity in the channel of the suction part and the channel of the spray part were measured by using the foreign matter removal device according to the present invention. In this case, a flow rate in the suction part is 1,080 LPM, and a flow ratio between the suction part and the spray part is 1:4.

**[Table 3]**

| | Uniformity of velocity in spray part | Uniformity of velocity in suction part |
|---|---|---|
| Channel 1 | 0.97 | 0.85 |
| Channel 2 | 0.97 | 0.85 |
| Channel 3 | 0.98 | 0.84 |
| Channel 4 | 0.98 | 0.86 |
| Channel 5 | 0.98 | 0.82 |
| Channel 6 | 0.98 | 0.86 |
| Channel 7 | 0.98 | 0.89 |
| Channel 8 | 0.98 | 0.89 |
| Channel 9 | 0.98 | 0.87 |
| Channel 10 | 0.98 | 0.86 |
| Channel 11 | 0.98 | 0.87 |
| Channel 12 | 0.98 | 0.83 |
| Average | 0.97 | 0.86 |

**[Table 4]**

| | Average velocity in spray part | Average velocity in suction part |
|---|---|---|
| Channel 1 | 26.49 | 9.10 |
| Channel 2 | 25.97 | 8.66 |
| Channel 3 | 28.27 | 7.65 |
| Channel 4 | 28.59 | 8.81 |
| Channel 5 | 28.23 | 8.87 |
| Channel 6 | 28.36 | 9.07 |
| Channel 7 | 28.42 | 9.33 |
| Channel 8 | 28.52 | 9.70 |
| Channel 9 | 28.58 | 9.47 |
| Channel 10 | 28.51 | 9.27 |
| Channel 11 | 28.49 | 9.82 |
| Channel 12 | 28.15 | 8.30 |
| Average | 28.04 | 9.09 |

Table 3 shows a result of measuring uniformity (uniformity index) of velocities in the channels of the suction part and the channels of the spray part, and Table 4 shows a result of measuring the average velocity of the velocities in inlets of the channels of the suction part and inlets of the channels of the spray part. With reference to Tables 3 and 4, in the foreign matter removal device according to the present invention, the uniformity index of the flow velocities in the channels of the suction part and the uniformity index of the flow velocities in the channels of the spray part are respectively 0.97 and 0.86 closer to 1, which shows very high uniformity.

Further, it can be seen that the average velocity in the channels of the suction part and the average velocity in the channels of the spray part are not comparatively different from the overall average velocities of 28.04 and 9.09.

Therefore, it can be seen that the foreign matter removal device according to the position according to the present invention forms a comparatively uniform flow velocity in the foreign matter removal device by adjusting the flow ratio between the suction part and the spray part.

While the present invention has been described above with reference to the exemplary embodiments, it may be understood by those skilled in the art that the present invention may be variously modified and changed without departing from the spirit and scope of the present invention disclosed in the claims.

## Claims

1. An foreign matter removal device, the apparatus comprising:
a main body portion;
a plurality of channels formed at one side of the main body portion and configured to suction foreign substances; and
a discharge portion configured to provide a suction force to the channels and discharge the foreign substances to the outside,
wherein based on a direction perpendicular to the main body portion, one side of the channel has a straight shape, and the other side of the channel has a curved shape.

2. The apparatus of claim 1, further comprising:
a main spray body portion positioned at one side of the main body portion;
a plurality of spray channels included in the main spray body portion and configured to detach the foreign substances and correspond to the channels; and
a spray port portion positioned at one side of the discharge portion and configured to supply air to the spray channels.

3. The apparatus of claim 2, wherein the channel comprises:
an air suction portion disposed adjacent to the foreign substances; and
a first guide portion configured to guide the foreign substances so that the foreign substances in the main body portion are moved to the spray part.

4. The apparatus of claim 2, wherein the spray channel comprises:
an air spray portion disposed adjacent to the foreign substances; and
a second guide portion configured to support the air to the air spray portion.

5. The apparatus of claim 3, wherein the air suction portion of the channel has a straight shape, and the first guide portion has a curved shape.

6. The apparatus of claim 4, wherein the air spray portion has a straight shape, and the second guide portion has a curved shape.

7. The apparatus of claim 3, wherein an end of the first guide portion extends toward the discharge portion.

8. The apparatus of claim 2, wherein lengths of the channels and lengths of the spray channels decrease as a distance between the discharge portion and the spray port portion decreases.

9. The apparatus of claim 2, wherein an inner width of the main body portion and an inner width of the main spray body portion increase in a direction toward the other side from one side at which the channels and the spray channels are formed.

10. The apparatus of claim 2, wherein the number of channels is four to twelve, and the number of spray channels is four to twelve.

11. The apparatus of claim 2, wherein the channel and the spray channel each have a swoosh shape.

12. The apparatus of claim 2, wherein a length of each of the main body portion and the main spray body portion is 180 mm to 580 mm.

13. The apparatus of claim 2, wherein the main body portion and the main spray body portion are positioned to be spaced apart from each other at a predetermined distance.

14. The apparatus of claim 2, wherein the main body portion further comprises a suction wall provided at a lower portion thereof and having a predetermined height, and the main spray body portion further comprises a spray wall provided at a lower portion thereof and having a predetermined height.

15. The apparatus of claim 2, wherein a flow ratio between the channel and the spray channel is 1:4 to 1:8.

16. The apparatus of claim 1, wherein a suction device is positioned at one end of the discharge portion and configured to suction the foreign substances.

17. The apparatus of claim 2, wherein pumps configured to suction and detach the foreign substances are respectively positioned at one end of the discharge portion and one end of the spray port portion.
